# EUROPÄISCHE PATENTSCHRIFT

(11) **EP 0 796 214 B1**
(45) Veröffentlichungstag und Bekanntmachung des Hinweises auf die Patenterteilung: **10.02.1999**
(21) Anmeldenummer: 95938304.3
(22) Anmeldetag: 06.12.1995
(51) Int. Cl.: B65G 63/02, B61D 47/00

(54) **UMLADESYSTEM AN EISENBAHNEN UND VERFAHREN ZUM UMLADEN VON TRANSPORTBEHÄLTERN**
RAILWAY TRANSHIPMENT SYSTEM AND TRANSPORT CONTAINER TRANSHIPPING PROCESS
SYSTEME DE TRANSBORDEMENT FERROVIAIRE ET PROCEDE DE TRANSBORDEMENT DE CONTENEURS DE TRANSPORT

(30) Priorität: 07.12.1994 AT 2279/94; 22.12.1994 AT 2388/94
(43) Veröffentlichungstag der Anmeldung: 24.09.1997
(73) Patentinhaber: ELIN ENERGIEVERSORGUNG GESELLSCHAFT m.b.H., 1141 Wien (AT)
(72) Erfinder: MAIR, Klaus, A-8020 Graz (AT)
(74) Vertreter: Rieberer, Stefan, Dipl.-Ing.
(86) Internationale Anmeldenummer: AT9500241
(87) Internationale Veröffentlichungsnummer: WO9617797

(56) Entgegenhaltungen:
- EP-A- 0 084 823
- WO-A-93/00281
- AT-B- 397 236
- US-A- 4 483 652
- US-A- 4 746 257

## Beschreibung

Die Erfindung betrifft ein Umladesystem an Eisenbahnen mit wenigstens einem ersten Eisenbahngleis für Transportbehälter, die sowohl auf Lastkraftwagen als auch auf Eisenbahnwaggons transportiert werden können - im folgenden Container genannt - mit einem stationären, seitlich drehbaren Umladekran und wenigstens einer Fahrspur für einen LKW und/oder einem zweiten Eisenbahngleis sowie ein Verfahren zum Umladen von Containern.

Der Erfindung liegt die Aufgabe zugrunde, einfache Umladesysteme zu finden, die auch an Eisenbahnstrecken ohne größeres Flächenangebot errichtet werden können - z.B. in jedem Bahnhof, wobei dort das Umladen den Fahrbetrieb nicht behindern soll, selbst wenn für das Umladen keine eigenen fahrdrahtfreien Verschubgleise zur Verfügung stehen.

Wobei die Systeme auch für das Umladen zwischen nebeneinanderstehenden Eisenbahnwaggons Anwendung finden sollen können und wobei das Umladen einzelner Container den Fahrbetrieb nicht behindern soll, selbst wenn für das Umladen keine eigenen, fahrdrahtfreien Verschubgleise zur Verfügung stehen.

Herkömmliche Systeme verursachen beim Umladen einigen Aufwand. Sie sind insbesondere auf Containerterminals angewiesen, wo mittels Portalkränen oder fahrbaren Hubstaplern die Container angehoben und umgeladen werden. Diese Methode verlangt bei einigen Varianten einen fahrdrahtfreien Betrieb, um elektrische Kurzschlüsse bzw. Gefährdungen des Umladepersonals zu verhindern. Gerade an solchen bekannten Containerterminals ist dies auch kein Problem, da diese dafür entsprechend eingerichtet und vor allem auf Verschubfahrten mittels Dieselloks eingerichtet sind.

Solche Containerterminals benötigen nachteiligerweise viel Bodenfläche und können daher nur an bestimmten Orten errichtet werden. Sie bedingen außerdem einen Unterbruch des Gütertransportflusses insofern, als die Waggons mit den Containern vom eigentlichen Fahrgleis der Eisenbahnstrecke entfernt und zu eigenen Verschubgleisen gebracht werden, um dort umgeladen zu werden. Herkömmliche Infrastrukturen an Eisenbahnstrecken können dabei für solche Terminals kaum benutzt werden. Da sich daher im gesamten Streckennetz einer Eisenbahn nur wenige Containerterminals befinden, erfordert schon allein das Abholen und Zubringen von Containern mittels Lastkraftwagen Fahrwege, die der eigentlich gewünschten Transportrichtung der Güter widersprechen. Abgesehen davon sind die verwendeten Anlagen wie Portalkräne, Hubstapler usw. aufwendige und teure Gerätschaften, so daß das Einrichten von Containerterminals etlichen Investitionsaufwand bedingt.

Aus der WO 93/00281 ist ein Umladesystem der eingangs genannten Art bekannt, bei welchem neben einem Eisenbahngleis zwei Lager für Container aufgestellt sind, zwischen welchen eine Container-Manipulationsvorrichtung angeordnet ist, welche Container aus dem Lager entnehmen und zu dem Gleis befördern kann und umgekehrt. An den Seitenwänden jedes Containers ist je ein Verladekran mit einem Ausleger für je einen Spreader angeordnet, mittels welchem je ein Container auf einen Eisenbahnwaggon geladen bzw. von diesem abgeladen werden können. An der dem Eisenbahngleis abgewandten Seite der beiden Lager sind Fahrspuren für LKW vorgesehen. Diese Einrichtung weist einerseits den Nachteil auf daß durch die beiden Lager viel Platz beansprucht wird, andererseits wird ein direkter Umladevorgang durch die Zwischenschaltung eines Manipulators verlangsamt. Der Verladevorgang auf die Waggons findet offenbar an einem Nebengleis ohne Fahrdraht statt.

Die AT-B-397 236 beschreibt zwar ein Umladesystem, bei dem Manipulatoren unterhalb von Fahrdrähten Container seitlich verschieben, jedoch sind diese Manipulatoren nur linear einsetzbar, so daß zum seitlichen Umladen eine genau seitliche Positionierung die Voraussetzung ist. Diese Positioniermöglichkeit wird durch ein aufwendiges Förderband system erzielt, an dem Container in Längsrichtung transportierbar sind. Zum sinnvollen Betrieb stellt die Lehre der AT-B auch auf ein Zwischenlager ab, das wiederum platzaufwendig ist, so das die Lehre der AT-B den eingangs formulierten Ansprüchen der Aufgabenstellung nicht gerecht wird.

Transportkräne, wie z.B. in der EP-A2-438 998 angegeben erfordern wiederum ein drittes Bahngleis, das während der Verladetätigkeit blockiert ist, sofern der Transportkran von einem nebenliegenden Gleis auf ein zweites nebenliegendes Gleis umladet. Findet die Umladung nur von einem Gleis auf den Waggon mit dem Ladekran oder umgekehrt statt, so bedeutet dies eine enorme Kapazitätsvergeudung, zumal der Ladekran nur selten - nur beim Umladen des einzigen, ihm zugeteilten Containers - zum Einsatz gelangt. Ein solcher Ladekran ist somit nicht universell einsetzbar.

Bekannt sind auch sogenannte ACTS-Umladesysteme, die aus speziell ausgerüsteten Eisenbahnwaggons mit je einem auf den Waggons montierten, schwenkbaren Rahmen und speziell ausgerüsteten Lastkraftwagen mit einem eigenen Ketten- bzw. Hakengerät für das Erfassen und Aufladen eines Containers auf den relativ aufwendig eingerichteten Fahrzeugrahmen des Lastkraftwagens ausgerüstet sind. Die ACTS-Umladesysteme können, weil sie die Container hauptsächlich nur in einer Ebene umladen, theoretisch an Fahrgleisen mit Oberleitungen eingesetzt werden, was jedoch insofern problematisch ist, als das Umladen in der Regel durch den Lastkraftwagenfahrer selbst durchgeführt werden soll, der jedoch unter Umständen nicht über eine ausreichende Schulung verfügt, so das er durch die spannungsführende Oberleitung unfallgefährdet ist. Ein Abschalten der Oberleitung führt wieder zu unerwünschten Unterbrechung bzw. Verzögerungen des Fahrbetriebes.

Abgesehen davon bedingt das ACTS-System ein schräges Heranfahren des Lastkraftwagens, weshalb die benötigte Fahrfläche wieder einiges an Größe bzw. Breite, gemessen vom vorhandenen Schienenstrang her, erreicht. Die speziellen Aufbauten auf den Waggons und auf den Lastkraftwagen erfordern eine regelmäßige Wartung. Die Aufbauten auf den Lastkraftwagen entziehen sich dabei der Wartung und Kontrolle der Bahnbetreiber. Der Ausfall eines der speziellen Aufbauten kann zu erheblichen Güterumschlagstörungen führen. Die Lastkraftwagen und Waggons können aufgrund des speziellen Aufbaus kaum für andere Zwecke verwendet werden, so das auch der Betrieb des ACTS-Systems hinsichtlich der Wirtschaftlichkeit und Betriebssicherheit Wünsche offen läßt. Ganz abgesehen von Nachteilen, die sich aus der erforderlichen Schrägstellung der Container beim Abladen ergeben. Ebenso kann es durch die erforderliche Neigung Probleme für den Containerinhalt geben, wenn sie vom Lastkraftwagen aus auf die Fahrbahn gerollt werden müssen, wie dies z.B. dann der Fall ist, wenn ein LKW-Fahrer nicht rechtzeitig bei der Umladestelle erscheint, um z.B. seinen Container von einem Waggon in Empfang zu nehmen. In solchen Fällen muß ein anderer LKW den Container vom Waggon abladen und am Boden abstellen, wozu wieder einige Fahrleistung und Platz erforderlich sind. Das Umladen zwischen benachbarten Eisenbahnwaggons auf parallelen Gleisen ist mit dem ACTS System nachteiligerweise überhaupt nicht möglich.

Um bei mehreren abgestellten Containern einen bestimmten wieder aufzunehmen, benötigt es erst recht wieder eine größere Fläche, damit die Zufahrt für die Lkws nicht durch abgestellte Container blockiert ist. Schlußendlich müssen die Container selbst über spezielle Einrichtungen verfügen, die sie wieder schwerer und teurer gestalten und deren universelle Anwendbarkeit einschränken.

In Ergänzung der obengenannten Aufgabe sollen alle angeführten Nachteile, insbesondere auch die des ATCS-Systems vermieden werden.

Gelöst werden die gestellten Aufgaben durch die Erfindung erstmals durch die Anwendung der Merkmale des Anspruches 1.

Ebenso gelöst wird die gestellte Aufgabe durch ein Verfahren gemäß Anspruch 11, bei dem mittels ortsfestem Umladekran mit Auslegerarm und daran befestigten Spreader der Kran eine fahrspurbreit entfernt vom Gleis aufgestellt wird, der Lastkraftwagen neben den Kran geführt wird, der Container mittels Spreader erfaßt, angehoben und über den Lastkraftwagen hinweg knapp über den Eisenbahnwaggon gehoben wird, ohne dabei mit der Oberseite des Auslegerarms bzw. des Spreaders in den Sicherheitsabstand zum Fahrdraht über dem Eisenbahnwaggon einzudringen, wobei der Spreader mit dem Container vorzugsweise automatisch über dem Waggon parallel zum Gleis gedreht wird. Selbstverständlich löst auch das in den Ansprüchen 12 beschriebene bzw. gekennzeichnete Verfahren die gestellte Aufgabe.

Gelöst wird die gestellte Aufgabe durch die Erfindung gemäß Anspruch 1 andererseits auch dadurch, das ein zweiter Kran zur Kooperation mit dem ersten Kran vorgesehen ist, wobei die Baubreite einen normgemäß freien Bereich zwischen den zwei Gleisen nicht oder nicht wesentlich überschreitet und wobei an den freien Enden der Auslegerarme für das Kooperieren mit Eckbeschlägen an den Containern Angriffsorgane vorgesehen sind.

Die gestellte Aufgabe wird weiters durch ein neues Verfahren nach Anspruch 13 gelöst, bei dem einem ersten Umladekran ein zweiter Umladekran gegenüber gestellt wird, wobei die beiden zu be- bzw. entladenden Waggons bzw. der Lkw etwa im Bereich zwischen den beiden Kranen aufgestellt wird, worauf die beiden Auslegerarme - vorzugsweise synchron - an die beiden Stirnseiten bzw. über deren Eckbeschläge eines umzuladenden Containers herangeführt werden, wobei gleichzeitig die Angriffsorgane in eine Position rechtwinkelig zu den Gleisen geschwenkt werden und - gegebenenfalls über Bilderkennung gesteuert - mit den Eckbeschlägen verrastet werden, worauf der Container wenig angehoben und durch gleichzeitiges Zurückdrehen der Krane über die Verbindungslinie zwischen den Kranen geführt und am jeweiligen anderen Fahrzeug abgestellt wird, ohne dabei mit der Oberseite der Auslegerarme bzw. der Angriffsorgane in den Sicherheitsabstand zum Fahrdraht über dem Eisenbahnwaggon einzudringen.

Die Eckbeschläge sind dabei so gestaltet, das man sowohl seitlich als auch von oben verrasten kann. Herkömmlich und auch bei der Erfindung werden sinnvollerweise die genormten Twistlocks verwendet, die mittels verdrehbaren Riegeln an den Eckbeschlägen festgemacht werden können. Etliche Verladevorgänge können dabei mittels seitlichem Andocken vorgenommen werden. Bei anderen wird eher von oben angedockt. Die Bauhöhe der Angriffsorgane muß dann natürlich entsprechend gering sein. Das Andocken von oben erleichtert Container abzuladen, die unmittelbar neben bzw. hintereinander auf einer Waggonladefläche aufgeladen sind, weshalb ein seitliches Andocken an zumindest einer Stirnfläche des betreffenden Containers unmöglich ist.

Aber auch für Wechselaufbauten - die im Rahmen dieser Anmeldung auch unter "Container" zu subsummieren sind -, die oben nicht über Eckbeschläge verfügen, sondern hubstaplerähnlich von unten ergriffen werden müssen, um angehoben und transportiert werden zu können, bieten erfindungsgemäße Angriffsorgane, die oberhalb der Container gehoben werden können Vorteile. Solche speziellen Angriffsorgane verfügen über seitliche, parallel zur Längserstreckung schwenkbare Arme, die nachdem die Angriffsorgane über den Container geschwenkt und parallel zu diesem gedreht wurden, nach unten geschwenkt werden können und in dieser Position dann mittels Krallen o.dgl. den Container bzw. Wechselaufbau untergreifen, um ihn anzuheben.

Die Erfindung erlaubt somit auch bei geringem Containerumsatz einen wirtschaftlichen Betrieb ohne Fahrdrahtnetzabschaltung, indem es einfach aufgebaut ist, wenn die Fahrspur einerseits zwischen dem Umladekran und dem Gleis angeordnet ist und der Kran in seiner Hubhöhe durch den Sicherheitsabstand zum Fahrdraht begrenzt ist.

Die Erfindung löst somit die gestellten Aufgaben und gestattet ein ökonomisches, rasches Umladen von Containern und Wechselaufbauten zwischen Waggons aber auch von Waggons auf Lkws und umgekehrt, sofern andererseits wenigstens ein zweites benachbartes Gleis vorgesehen ist, oder wenn eines der Gleise als Mattengleis ausgebildet ist und eine Fahrspur für Lastkraftwagen aufweist.

Aus der Begrenzung der Hubhöhe ergeben sich sicherheitstechnische Vorteile und die Möglichkeit des kontinuierlichen Fahrbetriebes. So kann beispielsweise ein einziger Container in einem bestimmten Bahnhof abgeladen werden, ohne das der Waggon wie bisher üblich von dem Zug abgekoppelt werden muß, bzw. ohne das der Zug sein Fahrgleis verlassen muß. Die Aufstellung des Krans eine fahrspurbreit entfernt vom Gleis bewirkt, das der Lastkraftwagen zwischen Kran und Waggon geführt wird, woraus sich beim Umladen geringste Ladezeiten ergeben, was wiederum einer geringstmöglichen Behinderung des Fahrbetriebes entgegen kommt. Wobei der Spreader mit dem Container beim Aufladen auf einen Waggon vorzugsweise automatisch über dem Waggon parallel zum Gleis gedreht wird, was durch dem Fachmann bekannte Sensoren möglich ist.

Durch die elektrische Verbindung der außenliegenden Teile des Umladekrans mit dem Gleis kann eine Erhöhung der Sicherheit gegen Stromunfälle erzielt werden. Die Erdung der metallischen Außenteile des Krans führt weiters aus sicherheitstechnischen Gründen zu einer Reduktion des vorgeschriebenen Sicherheitsabstandes zum Fahrdraht. Zusätzliche Sicherheit ist dadurch gegeben, daß die Auslegerarme und gegebenenfalls die Angriffsorgane gegen elektrischen Überschlag oberflächenisoliert sind.

Die vertikale Bewegungsfreiheit der Krane kann dann optimiert werden, wenn die Bauhöhe der Organe mit der Bauhöhe des Auslegearms im Bereich des Gleises zusammen mit einer allfälligen Bewegungshöhe für das Abheben der Organe mit einem Container weniger als 1600mm ausmacht.

Eine weitere Ausführungsform, die der Sicherheitserhöhung gegen Stromunfälle dient, ist dadurch gekennzeichnet, das die Hubhöhe des Auslegerarms, sobald dieser in Richtung des Gleises weist, durch eine mechanische Sperre am Ursprung des Auslegerarms begrenzt ist. Eine mechanische Sperre, für die dem Fachmann verschiedene Varianten in den Sinn kommen, hat den Vorteil der Zuverlässigkeit gegenüber einer elektrischen Sperre, die bei Bedarf jedoch auch zur Anwendung gelangen kann. Unter elektrischer Sperre ist eine Einrichtung zu verstehen, die durch geeignete Sensoren, das können elektrische Schalter, elektromagnetische oder elektrostatische Näherungsschalter, aber auch Bildaufnehmer o.dgl. sein, die den Näherungszustand der frei abragenden Teile des Auslegerarmes in bezug auf den Fahrdraht überwachen und bei zu großer Annäherung den - in der Regel elektrischen - Antrieb des Kranes stoppen. Die Näherungssensoren detektieren das elektromagnetische oder elektrostatische Feld des Fahrdrahtes und stoppen den Antrieb ab einem bestimmten Detektionswert der Krane automatisch.

Gemäß einer weiteren speziellen Ausbildung der Erfindung ist die Fahrspur als Mattengleis ausgebildet und ein zweites Gleis für Eisenbahnwaggons vorgesehen, das im Normalabstand (n) zum ersten Gleis (1) angeordnet ist. Diese Ausbildung ermöglicht das alternative Umladen von Eisenbahnwaggons auf Lastkraftwagen oder Eisenbahnwaggons. Bei Bedarf könnte auch das erste Gleis als Mattengleis ausgebildet sein, so das theoretisch sogar eine Umladung zwischen zwei Lkws möglich ist. Natürlich liegt im Rahmen der Erfindung auch eine Variante, bei der auch auf der anderen Seite des Krans eine Fahrspur bzw. gegebenenfalls ein Gleis oder ein Mattengleis vorgesehen ist.

Sollen mehrere Container umgeladen werden, ist gemäß einer Ausgestaltung der Erfindung vorgesehen, daß wenigstens einem Gleis eine Seilzugrangieranlage für das Verschieben von Waggons zugeordnet ist, mit der verschubähnliche Zugbewegungen durchgeführt werden können, ohne eine Lok zu beanspruchen.

Optimale Flexibilität erlangt das System nach einer weiteren Ausgestaltung dadurch, daß die beiden Krane gesteuert zu- oder voneinander verschiebbar sind, wobei sie dabei vorzugsweise auf Führungsschienen längsverfahrbar sind, die insbesondere so ausgebildet sind, daß sie gegengleich ausgebildete Kranräder so umgreifen, daß sie allfällige Kippmomente der Krane in den Boden leiten. Die Distanz der Krane zueinander ist dabei vorzugsweise durch mechanische Begrenzer wie z.B. Stahlseile oder geeignete Bremsen zu begrenzen, um allfällige Container nicht auf Zug zu belasten. Bei starr am Boden montierten Kranen stellt sich dieses Problem natürlich nicht.

Vor allem, wenn Bedarf an einem kleinen Containerzwischenlager besteht, kann die Erfindung vorteilhafterweise so weitergebildet sein, daß im Zugriffsradius des Krans eine Abstellfläche für Container ausgebildet ist, die vorzugsweise gegenüber der Fahrspur etwa um die Höhe eines Containers tiefergelegt ist. Diese Ausgestaltung erlaubt das bis zu doppelte Zwischenspeichervolumen (übereinanderstapeln der Container), wobei bei nur einfachem Zwischenspeichervolumen als besonderer Vorteil die Möglichkeit zu erwähnen ist, daß aus dem Zwischenspeicher Container entnommen werden können, die, ohne daß sie wesentlich über das Niveau der Fahrspur gehoben werden müssen, auf einen Lastkraftwagen oder auf einen Eisenbahnwaggon gehoben werden können. Insofern ergibt sich eine gute Platzausnutzung und kein zusätzlicher Aufwand beim Kran hinsichtlich seiner Hubhöhe, die natürlich im Falle einer nicht abgesenkten Zwischenspeicherfläche eine doppelte Containerhöhe erreichen müßte, um hintenstehende Container zum LKW oder Waggon zu bringen.

Einen universellen Einsatz gestattet die Erfindung mit einer besonderen Weiterentwicklung, bei der der Spreader Greifzangen für Wechselaufbauten aufweist, die in einer Ebene parallel zu den Containeraußenwänden schwenkbar sind. Die seitliche Schwenkbarkeit in Richtung der Containerlängserstreckung ist platzsparend. Völlig nach oben geschwenkte Greifzangen reduzieren natürlich auch die Bauhöhe des Spreaders für den Angriff an Containern mit oberen Eckbeschlägen. Natürlich ist für das Untergreifen der Wechselaufbauten zusätzlich zu dem seitlichen Verschwenken in Längsrichtung auch ein geringes Ausschwenken senkrecht dazu möglich, um die eigentlichen Greiforgane seitlich am Aufbau nach unten zu führen und unter diesen zu klappen.

Ein besonders schnelles und einfaches Umladen ergibt sich, wenn der Spreader mit einem automatischen Drehmechanismus versehen ist, der ihn mit seiner Längserstreckung, wenigstens im Bereich des ersten Gleises, automatisch parallel zum Gleis dreht, und/oder wenn der Auslegerarm - insbesondere teleskopisch ausfahrbar und so lang ist, daß er ohne Verschubbewegung am Waggon wenigstens zwei 20-Fuss-Container umladen kann.

Eine einfache Bedienung der Kranen ergibt sich, wenn gemäß einer Weiterbildung den beiden Kranen eine Steuerungseinheit zugeordnet ist, die den einen Kran in Abhängigkeit von den händisch gesteuerten Positionen des anderen Kran und in Abhängigkeit von der vorliegenden Containergröße automatisch in die Andock- und/oder Umladeposition steuert.

Zur Verbesserung der Sicherheit kann noch die Hubhöhe der Auslegerarme durch eine - vorzugsweise justierbare - mechanische Sperre begrenzt sein, für die dem Fachmann verschiedene Lösungen bekannt sind. Im Prinzip kann jeder Kran von seinem Antrieb her auf eine Maximalhöhe ausgelegt sein, so daß mechanische Sperren überflüssig sind, jedoch kann mit solchen Kranen nicht flexibel auf örtliche Unterschiede eingegangen werden.

Im Unterschied zu den herkömmlichsten Kranen ist bei den vorliegenden systembedingt eine einfache Konstruktion möglich, bei der lediglich ein vertikaler Hubzylinder für eine Hubhöhe von ca. 40cm und je ein horizontaler Teleskoparm vorgesehen ist, wobei die Hydraulik vorzugsweise beim Abheben und wegschwenken eines Containers von einem Eisenbahnwaggon, einem Lkw o.dgl., drucklos schaltbar ist, so daß sich die waagrechten Teleskope automatisch verlängern bzw. verkürzen, sobald ihre freien Enden mit den Eckbeschlägen über die Angriffsorgane verbunden sind.

Weitere erfindungsgemäße Merkmale und deren inhärenten Vorteile gegenüber dem Stand der Technik ergeben sich für den Fachmann aus den Ansprüchen und den Zeichnungen bzw. aus deren Beschreibung.

Anhand eines beispielhaften, mittels Skizzen dargestellten Ausführungsbeispieles wird die Erfindung näher erläutert. Es zeigen dabei:
- Fig.1: das Schema eines erfindungsgemäßen Umladesystems in Draufsicht;
- Fig.2: ein ähnliches Schema mit zwei Gleisen und einer Bewegungsdarstellung eines mittels erfindungsgemäßen Kran bewegten Containers;
- Fig.3: einen herkömmlichen Eckbeschlag eines Containers für gem. VDI 2687,
- Fig.4: eine Seitenansicht auf einen Waggon mit Container an einer normalen Fahrtrasse einer Eisenbahnlinie;
- Fig.5: eine Ansicht in Längsrichtung des Gleises mit ausgefahrenen Auslegerarm,
- Fig.6: eine vergleichbare Darstellung beim Abladen eines Wechselaufbaus.
- Fig.7: das Schema eines erfindungsgemäßen Umladesystems in Draufsicht;
- Fig.8: eine Seitenansicht auf einen Waggon mit Container an einer normalen Fahrtrasse einer Eisenbahnlinie und
- Fig.9: einen schematischen Container mit seinen Eckbeschlägen;

Die Figuren werden zusammenhängend beschrieben. Gleiche Bezugszeichen bedeuten gleiche Bauteile. Funktionsähnliche Bauteile tragen gleiche Bezugszeichen mit unterschiedlichen Indizes. Die Erfindung ist durch die beispielhafte Darstellung der Figuren nicht eingeschränkt. In ihrem Rahmen liegen vielmehr unterschiedliche Varianten und Ausführungen, auch solche mit Bauteilen, die zum gegenwärtigen Zeitpunkt noch nicht auf dem Markt sind - wie beispielsweise unterschiedliche Materialien mit denselben Eigenschaften wie die beschriebenen.

Auf die dem Fachmann allgemein bekannten mechanischen Ausführungsdetails bei den Angriffsorganen, wie Twistlocks, bei den Kranbestandteilen, wie Hydraulik, Steuerungen und mechanische Auslegung, sowie bei der Containerausgestaltungen wird auch nicht im Detail eingegangen, da das Wesen der Erfindung in den angegebenen Prinzipien liegt. Jedenfalls gilt die erwähnte VDI-Norm als im Rahmen dieser Anmeldung liegend, zum Zwecke der Kombination der dort angegebenen Bauelemente mit den hier ausdrücklich dargestellten, als hierin geoffenbart Dies gilt auch für die Seilzugverschub- bzw. -rangieranlagen, wie sie beispielsweise im Prospekt aus 1994 der Firma Vollert GmbH/D-Weinsberg unter dem System 200 und 201 angegeben sind.

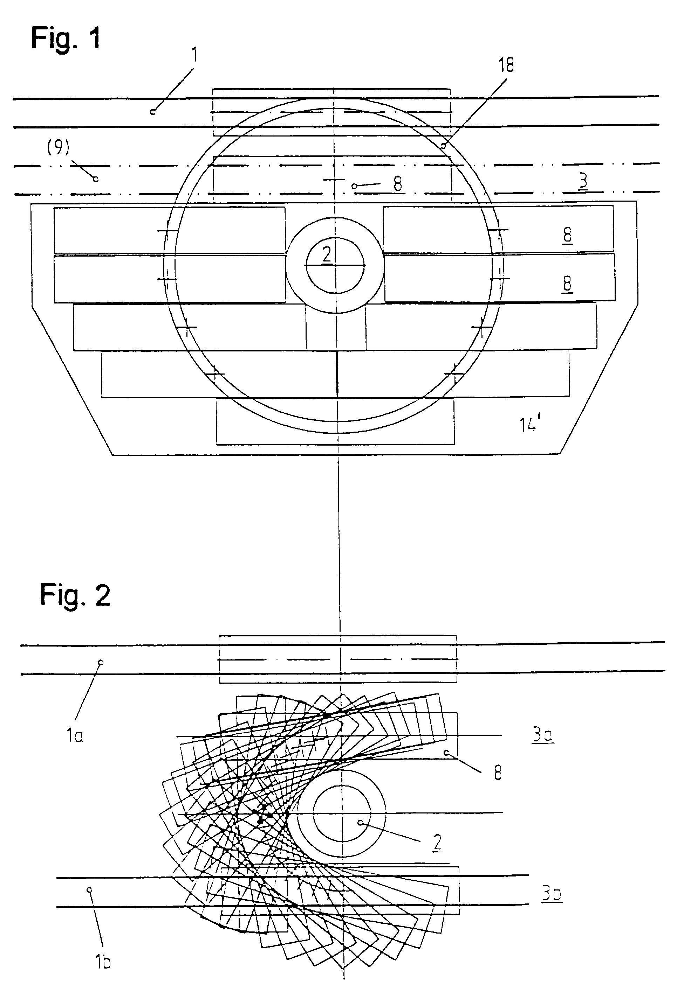

Das Prinzip der neuartigen Anordnung ist deutlich aus Fig.1 ersichtlich: Ein Kran 2 mit einem Auslegerarm, dessen Aktionsradius 18 einen Bereich über einem ersten Gleis 1, einer Fahrspur 3 und einer Abstellfläche 14' für Container 8 überdeckt, stellt das eigentliche Umladeorgan dar, das Container 8 von Eisenbahnwaggons auf Lastkraftwagen, die auf der Fahrspur 3 zufahren, und umgekehrt umladen kann. Die Abstellfläche dient dabei als Zwischenlager, wenn z.B. für den betreffenden Container 8 der entsprechende Waggon oder der entsprechende Lkw noch fehlt. Bevorzugt ist die Abstellfläche 14' um etwa die Höhe eines Containers 8 tiefer als die Fahrspur 3. Die Fahrspur kann auch als Mattengleis 9 ausgebildet sein, um dort auch den Waggonverkehr zu ermöglichen, wobei im Unterschied zum Gleis 1 in den meisten Fällen auf einen Fahrdraht verzichtet wird. Fig.2 stellt eine Variante dar, bei der auf der anderen Seite des Krans 2 eine zweite Fahrspur 3b mit einem zweiten Mattengleis 1b angeordnet ist.

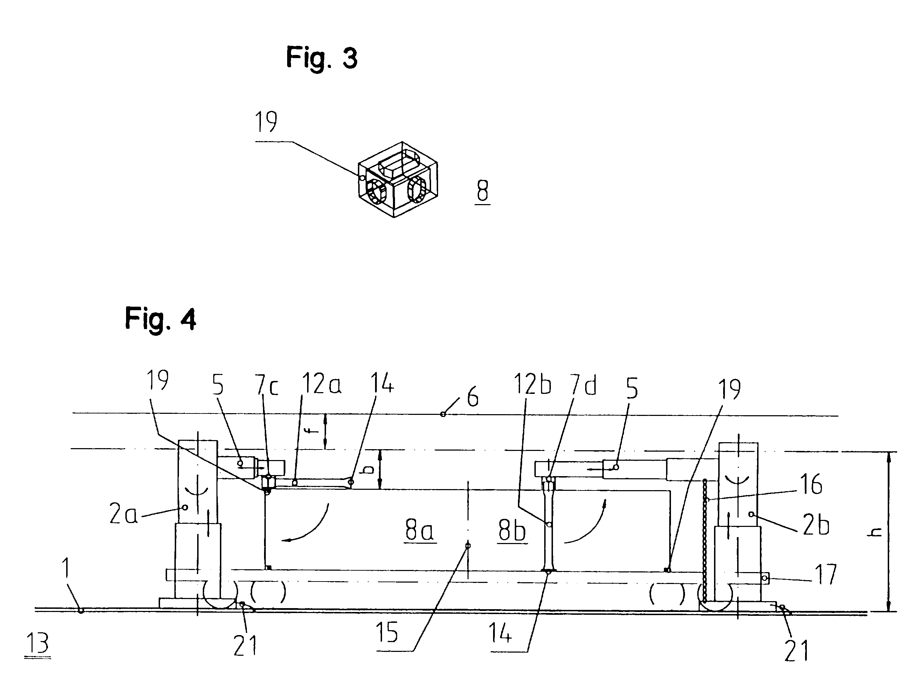

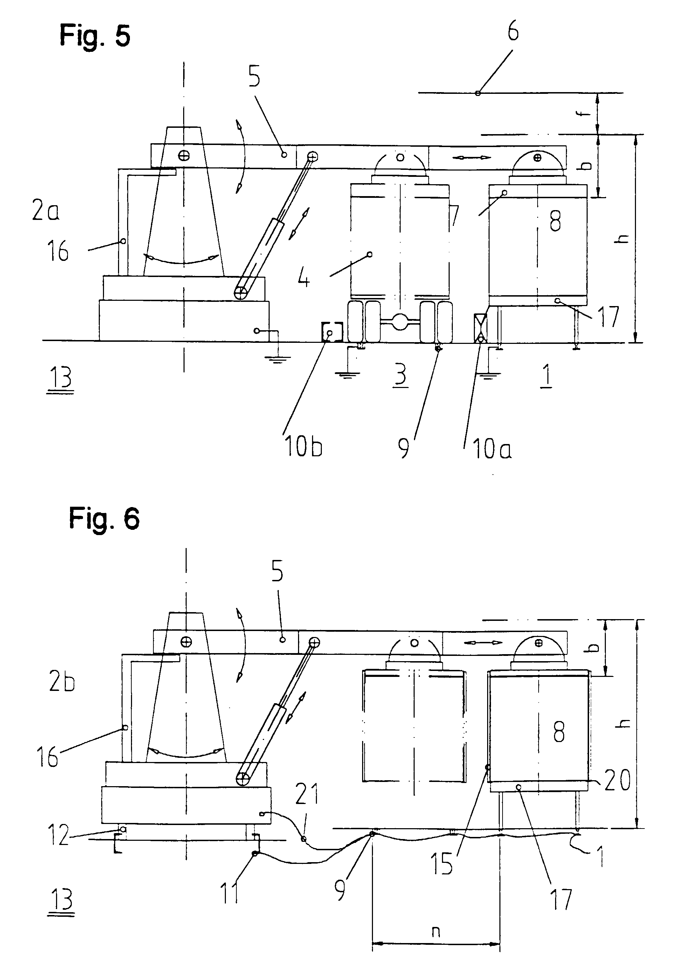

Fig.4 zeigt einen Eisenbahnwaggon 17 auf dem Gleis 1 mit einem aufgeladenen Container 8, der über übliche Containereckbeschläge 19 verfügt. An diesen Eckbeschlägen 19 greifen bekannte Greifelemente von Spreadern 7 an bzw. ein, um den Container 8 aufzunehmen und weiter zu transportieren. Die dafür bekannten Techniken und Bauteile sind dem Fachmann bekannt und können beispielsweise von den bekannten Hubstaplern z.B. der Firma Kalmar LMV/Ljungby/Schweden übernommen werden. In der Regel sind dies Drehzapfen (Twistlocks), wie auch der VDI 2687 entnommen werden kann. Erfindungswesentlich ist, daß der Auslegerarm 5 mit dem Spreader 7 (vgl. Fig.5) beim Abheben oder Abstellen eines Containers 8 am Waggon 17 nicht in den Sicherheitsabstand f zum Fahrdraht 6 eindringt, der im Unterschied zum Bekannten über dem Gleis 1 unter Spannung verbleiben kann. Die Bauhöhe des Auslegerarms 5 zusammen mit der Bauhöhe des Spreaders 7 und einem gewissen Höhenspiel ist somit nicht größer als b, z.B. 1600 mm. "h" entspricht somit der Gesamthöhe des Krans 2 bei Einsatz unter einem Fahrdraht. Die Größe des Abstandes f ist normbedingt abhängig von der Ausführung des Krans 2. Dessen außenliegenden Metallteile sind erfindungsgemäß elektrisch mit dem Erd- bzw. Schienenpotential verbunden und/oder nach außen isolierend beschichtet.

Der Aufbau nach Fig.6 zeigt im Unterschied dazu einen verfahrbaren Kran 2b, dessen Räder 12 mit Schienen 11 so im Eingriff stehen, daß allfällige Kippmomente in den Boden 13 geleitet, bzw. von diesem übernommen werden. Anstelle des Spreaders 7 nach Fig.5 wird hier ein Aufbau mit Greifzangen 15 dargestellt, die in einer Ebene senkrecht auf die Zeichenebene verschwenkt werden können, um mit dem Auslegerarm 5 über den Waggon 17 hinwegfahren zu können. Im unteren Bereich haben diese Greifzangen 15 Haken 20, die den Container 8 (z.B. ein Wechselaufbau) untergreifen und ihn derart anhebbar bzw. transportierbar machen. Auch hier sind symbolisch Schienen 9 eines Mattengleises dargestellt, die mit den Schienen 11 des Krans 2b und mit den Schienen 1 mittels elektrischer Verbindungsleitung 21 verbunden sind. Die außenliegenden Metallteile des Krans 2b sind ebenso mit dieser Leitung 21 gekoppelt, um alle erwähnten Teile auf dasselbe Potential zu bringen. Die Gleise 9 und 1 befinden sich im Normalabstand n zueinander, der dem genormten Minimalabstand zwischen Gleisen entspricht, so daß eine solche Anordnung bei größter Effizienz nur wenig Bodenfläche verbraucht. ein besonderes Verfahren zum Umladen eines Transportbehälters, insbesondere eines Containers 8 von einem Lastkraftwagen 4 auf einen Eisenbahnwaggon 17, mittels ortsfestem Umladekran 2 mit Auslegerarm 5 und daran befestigten Spreader 7 ergibt sich, wenn der Kran 2 eine fahrspurbreit entfernt vom Gleis 1 aufgestellt wird, der Lastkraftwagen 4 neben den Kran geführt wird, der Container 8 mittels Spreader 7 erfaßt, angehoben und über den Lastkraftwagen 4 hinweg knapp über den Eisenbahnwaggon gehoben bzw. geschwenkt wird, wobei er mit der Oberseite des Auslegerarms 5 bzw. des Spreaders 7 in den Sicherheitsabstand fzum Fahrdraht 6 über dem Eisenbahnwaggon 17 einzudringen, wobei der Spreader 7 mit dem Container 8 vorzugsweise automatisch über dem Waggon 17 parallel zum Gleis 1 gedreht wird. Ein weiteres Verfahren zum Umladen von Transportbehältern, insbesondere von Containern 8 ergibt sich dabei, wenn der Auslegerarm (5) über allfällig abgestellte Container 8 hinweg an einem tieferliegenden Platz 14' auf der anderen Seite des Krans 2 absetzt, wobei dabei die Oberseite des Auslegerarms 5 bzw. des Spreaders 7 ebenso nicht in den Sicherheitsabstand f zum Fahrdraht 6 über dem Eisenbahnwaggon 17 eindringt, worauf ein Lastkraftwagen 4 zwischen den Kran 2 und das Gleis 1 geführt wird, auf die für ihn bestimmten Container 8 wieder mittels Kran 2 aufgeladen werden.

Ohne den Rahmen der Patentanmeldung zu verlassen, ist noch eine Variante denkbar, bei der der Kran näher an das Gleis herangerückt ist und die Fahrspur nicht zwischen Kran und Gleis sondern auf der anderen Seite des Krans ist. Bei einer solchen Anordnung würde der Nachteil des Hebens eines Containers über die Kranachse insofern abgeschwächt, wenn der Auslegerarm etwa gleich lang ist, wie bei den übrigen Ausführungsformen und Waggon und Lkw nebeneinander und schräg vom Kran entfernt zu stehen kommen. Auch könnte der Kran derart in Verlängerung der Fahrspur aufgestellt sein, daß die Fahrspur durch den Kran beendet ist. Ein solcher Aufbau benötigt besonders wenig Platz.

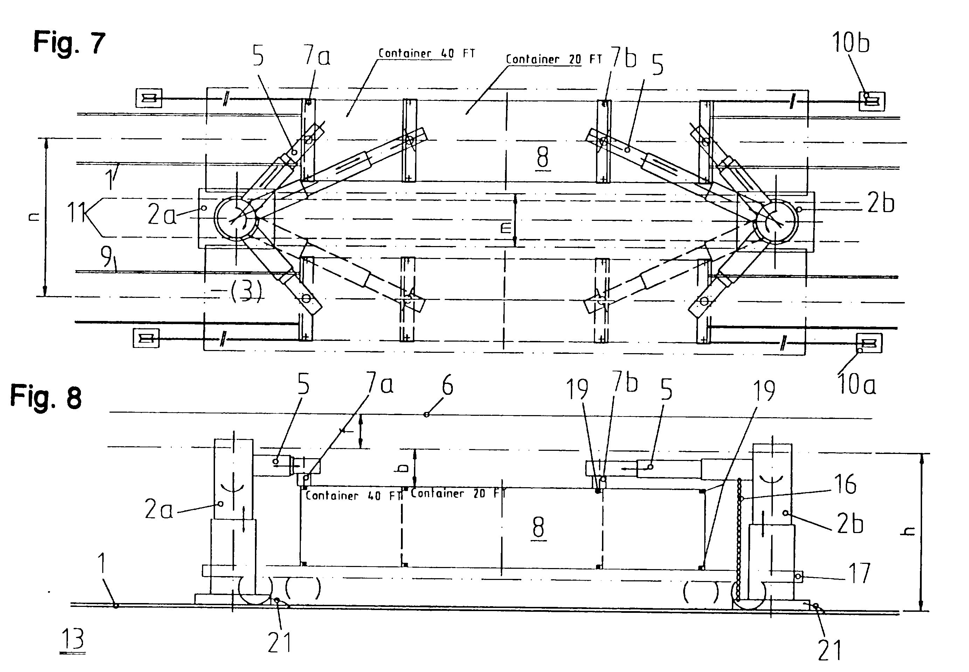

Fig.7 zeigt zwei Gleise 1 und 9, von denen Gleis 9 beispielhaft mit einer Fahrspur 3 für Lkws ausgerüstet sein kann. Die Gleise befinden sich beispielsweise in einem Normalabstand zueinander, der für einander entgegenkommende Züge mit maximaler Breite aus Sicherheitsgründen einen Abstand m freiläßt. Innerhalb der durch diesen Abstand definierten Breite befinden sich zwei um 180° drehbare Krane 2a, 2b, die über teleskopartige Auslegerarme 5 verfügen, an deren freien Enden Angriffsorgane 7a, 7b angeordnet sind, um mit Eckbeschlägen 19 der Container 8 zu kooperieren (z.B. über ein Twistlocksystem). Die Krane 2 haben nur eine geringe (ca. 40 cm) Hubhöhe b zur Verfügung, die insbesondere nach oben dadurch begrenzt ist, daß die Oberseite der Auslegerarme 5 nicht in den Sicherheitsabstand f zum Fahrdraht 6 eindringen kann. In Fig.8 ist hierzu symbolisch eine Kette 16 angedeutet.

In Fig.8 ist in der linken Bildhälfte das Andocken an einen Container 8a mit Eckbeschlägen 19 dargestellt, während in der rechten Bildhälfte (getrennt durch die strichpunktierte Linie 15) das Ergreifen eines Wechselaufbaus 8b dargestellt ist. Die gezeigten Krane 2a, 2b verfügen dabei an ihren Auslegerarmen 5 über modifizierte Angriffsorgane 7c, 7d, die mit Greifarmen 12a, 12b versehen sind. Die Greifarme 12a, 12b können seitlich eines Containers 8a bzw. Wechselaufbaus 8b aus der Waagrechten in die Senkrechte geschwenkt werden, um mit Greifern 14 unter den Container 8a bzw. Wechselaufbau 8b greifen zu können, um diese anheben bzw. umladen zu können. Die Angriffsorgane 7c, 7d sind somit universell verwendbar. Sie können sowohl von oben an Eckbeschläge 19 andocken (Container 8a), als auch beliebige Aufbauten (Wechselaufbau 8b) von unten erfassen und anheben bzw. umladen.

Die Krane 2 können auf Schienen 11 zueinander verschieblich sein, um besser auf unterschiedliche Containergrößen angepaßt zu werden, bzw. um entlang eines Zuges an mehreren Positionen zum Einsatz gebracht werden zu können. Eine Variante dazu ergibt sich, wenn - wie dargestellt - Seilzugrangieranlagen 10a, 10b für das Rangieren von Waggons vorgesehen sind.

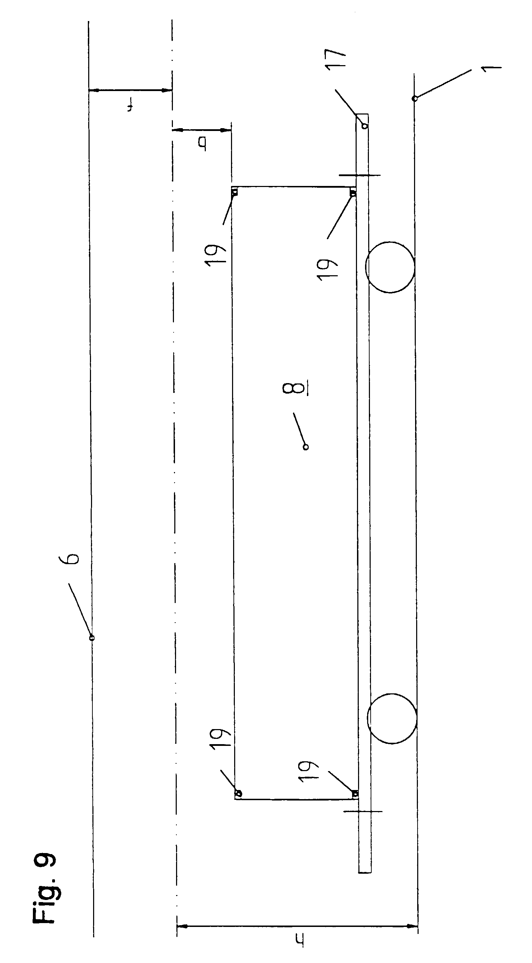

Fig.9 zeigt die verschiedenen Angriffsmöglichkeiten (Beschläge 19) für die Auslegerarme der Kranen.

Fig.3 zeigt einen typischen Eckbeschlag eines Containers 8, dessen Öffnungen z.B. mittels Videotechnik und Bilderkennung für ein schnelles und automatisches Andocken der Angriffsorgane benutzt werden können.

Ein typischer Umladevorgang mit diesem Aufbau könnte so erfolgen:

Ein Containerwaggon 17 wird durch die Rangieranlage 10 in den Bereich zwischen den Kränen 2 gebracht. Der eine teleskopische Auslenkerarm 2a wird manuell zu den Eckbeschlägen 19 gefahren, wobei das Angriffsorgan 7a so gesteuert wird, daß es durch Überlagerung der Drehbewegung des Kranes 2a, der Translation des Auslenkerarms 5 und einer Drehbewegung des Angriffsorganes selbst, entlang der Gleisachse und im rechten Winkel dazu geführt wird. Worauf der Kran 2a absenkt und zwei Twistlocks des Angriffsorgans 7a mit den Eckbeschlägen 19 des Containers verriegeln, während automatisch die beiden anderen Twistlocks des anderen Aufnahmeorgans 7b durch Vorgabe der jeweiligen Containergröße (20,30 oder 40 Fuß) mit den anderen Eckbeschlägen 19 verriegeln. Danach erfolgt ein leichtes Anheben des Containers 8 und ein synchrones Schwenken der Krane 2, bei dem mittels Steuerung auf Parallelität zu den Gleisen 1,9 geachtet wird. Wonach der Container auf einen anderen Waggon oder einen Lkw entsprechend abgesetzt wird

Besonders schnell erfolgt das Umladen, wenn gemäß einer Weiterbildung die Auslegerarme und deren Angriffsorgane automatisch und gegengleich gesteuert sind, wobei unter automatisch jedes sensorunterstützte Steuerungsverfahren zu verstehen ist. Die Gegengleichheit bezieht sich dabei auf das Prinzip der jeweiligen Bewegung, die im Detail in Abhängigkeit vom tatsächlichen Aufstellungsort des Containers unterschiedlich sein kann und bis unmittelbar vor dem Andocken zwischen Angriffsorgan und Eckbeschlag bzw. Containerunterseite auf Sicht oder sensorüberwacht automatisch gesteuert werden sollte.

### BEZUGSZEICHENLISTE

- 1: erstes Gleis
- 2: Umladekran, Kran
- 3: Fahrspur für Lkws (ev. Mattengleis)
- 4: Lastkraftwagen, LKW
- 5: Auslegerarm des Krans
- 6: Fahrdraht, Oberleitung
- 7: Angriffsorgane zum Erfassen eines Containers an seinen Eckbeschlägen bzw. Spreader an Auslegerarm 5, bzw. Greifvorrichtung zum Ergreifen und Anheben eines Transportbehälters über einen großen Teil seiner Längserstreckung
- 8: Container, Transportbehälter für Waren, z.B. Wechselaufbau von Lkws
- 9: zweites Gleis
- 10: Seilrangieranlage
- 11: Schienen für Kran
- 12: Greifarme für Wechselaufbauten
- 13: Boden
- 14: Greifer
- 15: Trennlinie
- 16: Mechanische Sperre symbolisch durch Kette angedeutet, die verhindert, daß der Kran höher fährt. Im Rahmen der Erfindung liegen verschiedene Sperrmöglichkeiten, die bei Bedarf justierbar sein können, um den Vorortbedingungen der Fahrdrahthöhe Rechnung zu tragen.
- 18: Aktionsradius
- 17: Eisenbahnwaggon
- 19: Eckbeschläge
- 20: Haken
- 21: Verbindungsleitung dient dazu, den Kran 2 auf Schienenpotential zu legen.
- m: normgemäß freier Bereich zwischen beladenen Waggons auf benachbarten Gleisen.
- n: Normabstand zwischen Gleisen
- h: für Ladezwecke verfügbare Höhe über Grund
- b: für Ladezwecke verfügbare Höhe über aufgeladenen Containern - maximale Bauhöhe für Auslegerarme 5 und Angriffsorgane 7
- f: eingriffsfreier Sicherheitsabstand über Gleisen unter stromführendem Fahrdraht

## Patentansprüche

1. Umladesystem an Eisenbahnen mit wenigstens einem ersten Eisenbahngleis (1) für Transportbehälter, die sowohl auf Lastkraftwagen als auch auf Eisenbahnwaggons transportiert werden können - im folgenden Container (8) genannt -, mit einem stationären, seitlich drehbaren Umladekran (2, 2a), der einen Auslegearm (5) aufweist, welcher einem gegengleichen Auslegearm (5) eines weiteren Umladekranes (2b) zum gleichzeitigen Ergreifen ein und desselben Containers (8) gegenübergestellt ist oder über einen Spreader (7) verfügt, und mit einem zweiten Gleis (9) und/oder einer Fahrspur (3) für einen LKW (4), welches bzw. welche unmittelbar neben dem Kran (2, 2a, 2b) angeordnet sind, wobei der oder die Auslegearme teleskopisch ausfahrbar und dessen oder deren Oberseiten im Bereich des Gleises (1) in ihrer Hubhöhe (h) zur Vermeidung elektrischer Überschläge durch einen Sicherheitsabstand (f) zum eingeschalteten Fahrdraht (6) begrenzt und Oberflächenisoliert sind, und wobei außenliegende Metallteile des Krans (2, 2a, 2b) elektrisch mit dem Gleispotential verbunden sind.

2. System nach Anspruch 1, dadurch gekennzeichnet, daß die Bauhöhe des Spreaders (7) mit der Bauhöhe des Auslegearms (5) im Bereich des Gleises (1) zusammen mit der nötigen Bewegungshöhe für das Ansetzen der beiden Auslegearme (5) bzw. für das Aufsetzen des Spreaders (7) auf einen Container (8) weniger als (b) 1600 mm beträgt.

3. System nach Anspruch 1 oder 2, dadurch gekennzeichnet, daß die Fahrspur (3) als Mattengleis ausgebildet ist und ein zweites Gleis (9) für Eisenbahnwaggons aufweist, das im Normalabstand (n) zum ersten Gleis (1) angeordnet ist.

4. System nach einem der vorhergehenden Ansprüche, dadurch gekennzeichnet, daß im Zugriffsradius des Krans (2) eine Abstellfläche (14') für Container (8) ausgebildet ist, die vorzugsweise gegenüber der Fahrspur (3) oder gegenüber dem zweiten Gleis (9) etwa um die Höhe eines Containers (8) tiefergelegt ist.

5. System nach einem der vorhergehenden Ansprüche, dadurch gekennzeichnet, daß der Spreader (7) Greifzangen (15) für Wechselaufbauten aufweist, die in einer Ebene parallel zu den Containeraußenwänden schwenkbar sind, bzw. daß die Auslegerarme (5) und deren Angriffsorgane (7) automatisch und gegengleich gesteuert sind, und/oder daß die Angriffsorgane (7) für das Umladen von Wechselaufbauten (8b) schwenkbare Greifarme (12) mit Greifern (14) aufweisen, die seitlich der Wechselaufbauten (8b) in Greifposition schwenkbar sind.

6. System nach einem der vorhergehenden Ansprüche, dadurch gekennzeichnet, daß mit dem Auslegerarm (5; 5a, 5b) elektrische Schalter, elektromagnetische oder elektrostatische Schalter, Näherungsschalter oder elektrooptische Sensoren verbunden sind, um bei zu großer Annäherung an den Fahrdraht (6) eine Unterbrechung des Kranantriebes herbeizurufen.

7. System nach einem der vorhergehenden Ansprüche, dadurch gekennzeichnet, das die Hubhöhe des Auslegerarms (5; 5a, 5b) durch eine mechanische Sperre (16) am Ursprung des Auslegerarms (5; 5a, 5b) begrenzt ist, und/oder das die Angriffsorgane (7) über Sensoren (19) und Aktuatoren verfügen, die im Bereich der Gleise (1,9) ein automatisches Ausrichten der Angriffsorgane (7) in einem rechten Winkel zu den Gleisen (1,9) ermöglichen, und/oder das der Spreader (7) mit einem automatischen Drehmechanismus versehen ist, durch den er mit seiner Längserstreckung im Bereich des ersten Gleises (1) automatisch parallel zu diesem drehbar ist, und/oder das der Auslegerarm (5; 5a, 5b) so lang ist, das durch ihn ohne Verschubleistung wenigstens zwei 20-Fuss-Container an zwei benachbarten Fahrzeugen umladbar sind

8. Umladesystem an Eisenbahnen nach einem der vorhergehenden Ansprüche mit wenigstens einem ersten und einem zweiten Eisenbahngleis (1,9), für Container (8) mit einem ersten, ortsfesten, drehbaren Umladekran (2a), dadurch gekennzeichnet, das ein zweiter Kran (2b) zur Kooperation mit dem ersten Kran (2a) vorgesehen ist, wobei die Baubreite der Krane (2a, 2b) einen normgemäß freien Bereich (m) zwischen den zwei Gleisen (1,9) nicht überschreiten, wobei an den freien Enden der Auslegerarme (5a, 5b) für das Kooperieren mit Eckbeschlägen (18) an den Containern (8) gegengleiche Angriffsorgane (7) vorgesehen sind.

9. System nach einem der vorhergehenden Ansprüche, dadurch gekennzeichnet, das die Auslegerarme (5) mittels Hydraulik teleskopisch ausfahrbar sind, wobei die Hydraulik vorzugsweise beim Abheben und Wegschwenken eines Containers (8) von einem Eisenbahnwaggon (17), einem Lkw o.dgl., drucklos schaltbar ist, so das die Teleskope automatisch verlänger- bzw. verkürzbar sind.

10. System nach einem der vorhergehenden Ansprüche, dadurch gekennzeichnet, das beiden Kranen (2a, 2b) eine Steuerungseinheit zugeordnet ist, die den einen Kran (2b) in Abhängigkeit von den händisch gesteuerten Positionen des anderen Krans (2a) und/oder in Abhängigkeit von der vorliegenden Containergröße automatisch in die Andock- und/oder Umladeposition steuerbar ist.

11. Verfahren zum Umladen eines Transportbehälters, insbesondere eines Containers (8) von einem Lastkraftwagen (4) auf einen Eisenbahnwaggon (17) oder umgekehrt, oder von einem Eisenbahnwaggon auf einen anderen mittels System nach einem der vorhergehenden Ansprüche dadurch gekennzeichnet, daß der Kran (2; 2a, 2b) eine Fahrspurbreite entfernt vom ersten Gleis (1) aufgestellt wird, der Lastkraftwagen (4) neben den Kran (2) bzw. die Krane (2a, 2b) geführt wird, der Container (8) mittels Spreader (7) oder Angriffsorgane für Eckbeschläge erfaßt, angehoben und über den Lastkraftwagen (4) hinweg knapp über den Eisenbahnwaggon gehoben und geschwenkt wird, ohne dabei mit der Oberseite des Auslegerarms (5) bzw. des Spreaders (7) in den Sicherheitsabstand (f) zum Fahrdraht (6) über dem Eisenbahnwaggon (17) einzudringen, wobei der Spreader (7) mit dem Container (8) vorzugsweise automatisch über dem Waggon (17) parallel zum Gleis (1) gedreht wird.

12. Verfahren zum Umladen von Transportbehältern, insbesondere von Containern (8) von - auf einem Gleis (1) befindlichen - Eisenbahnwaggons (17) auf Lastkraftwagen (4) oder zweite Eisenbahnwaggons, mittels stationärem Umladekran (2; 2a, 2b) mit Auslegerarm (5; 5a, 5b) und daran gegebenenfalls befestigten Spreader (7) nach einem der Ansprüche 1 bis 10, dadurch gekennzeichnet, das der Kran (2; 2a, 2b) eine fahrspurbreit entfernt vom Eisenbahnwaggon (17) aufgestellt wird, die Container (8) mittels Spreader (7) erfaßt, anhebt und über allfällig abgestellte Container (8) hinweg an einem tieferliegenden Platz (14') auf der anderen Seite des Krans (2; 2a, 2b) absetzt, wobei dabei die Oberseite des Auslegerarms (5) bzw. des Spreaders (7) nicht in den Sicherheitsabstand (f) zum Fahrdraht (6) über dem Eisenbahnwaggon (17) eindringt, worauf ein Lastkraftwagen (4) oder ein zweiter Waggon (9) zwischen den Kran (2;) und das Gleis (1) oder neben den Kran (2a, 2b) geführt wird, auf den die für ihn bestimmten Container (8) wieder mittels Kran (2; 2a, 2b) aufgeladen werden.

13. Verfahren zum Umladen eines Transportbehälters, insbesondere eines Containers (8) von einem Lastkraftwagen (4) auf einen Eisenbahnwaggon (17) oder umgekehrt, oder zwischen zwei nebeneinander stehenden Eisenbahnwaggons (17) mittels einem ortsfestem Umladekran (2a) mit Auslegerarm (5) und daran befestigtem Angriffsorgan (7)nach einem der Ansprüche 1 bis 10, dadurch gekennzeichnet, das dem ersten Umladekran (2a) ein zweiter Umladekran (2b) gegenüber gestellt wird, das die beiden zu be- bzw. entladenden Waggons (17) bzw. der Lkw (4) etwa im Bereich seitlich zwischen den beiden Kranen (2a, 2b) aufgestellt wird, worauf die beiden Auslegerarme (5a, 5b) - vorzugsweise synchron - an die beiden Stirnseiten des umzuladenden Containers (8) herangeführt werden, wobei gleichzeitig die Angriffsorgane (7) in eine Position rechtwinkelig zu den Gleisen (1,9) geschwenkt werden und - gegebenenfalls über Bilderkennung gesteuert - mit den Eckbeschlägen (19) des Containers (8) verrastet werden, worauf der Container (8) wenig angehoben und durch gleichzeitiges Zurückdrehen der Krane (2a, 2b) über die Verbindungslinie zwischen den Kranen (2a, 2b) geführt und am jeweiligen anderen Fahrzeug abgestellt wird, ohne dabei mit der Oberseite der Auslegerarme (5a, 5b) bzw. der Angriffsorgane (7) in den Sicherheitsabstand (f) zum Fahrdraht (6) über dem Eisenbahnwaggon (17) einzudringen.

## Claims

1. Railway transhipment system comprising at least a first railroad track (1) for transport receptacles which can both be transported on lorries and on railroad cars - hereinafter called container (8) - further comprising a stationary, laterally rotary transhipment crane (2, 2a) having a jib (5) opposed to a similar jib (5) of another transhipment crane (2b) for simultaneously seizing one and the same container (8), or has a spreader (7), and a second railroad track (9) and/or a trail (3) for a lorry (4) which is or are situated directly beside the crane (2, 2a, 2b), the jib(s) being telescopically extensible and its or their lifting stroke (h) being limited by a safety space (f) between its or their upper sides and the contact wire (6), and the surface being isolated within the range of the track (1) to avoid arcing over, and the metal parts of the crane (2, 2a, 2b), which face the outside, are electrically coupled to the track potential.

2. System according to claim 1, characterised in that the headroom of the spreader (7) and the headroom of the jib (5) within the range of the track (1) together with the necessary stroke of movement for attaching the two jibs (5) or to put the spreader (7) onto a container (8) amounts to less than (b) 1600 mm.

3. System according to claim 1 or 2, characterised in that the trail (3) is formed as a mat track and comprises a second railroad track (9) for railroad cars being spaced from the first track (1) by the standard distance (n).

4. System according to any one of the preceding claims, characterised in that a storing area (14') for containers (8) is formed within the access radius of the crane (2) and is preferably lowered by about the height of a container (8) with respect to the trail (3) or the second track (9).

5. System according to any one of the preceding claims, characterised in that the spreader (7) is provided with gripping tongs (15) for interchangeable superstructures which are pivotable in a plane parallel to the outer walls of the containers or that the jibs (5) and their application elements (7) are controlled automatically and in counterphase and/or that the application elements (7) are provided with pivotable gripper arms (12) including grippers (14) pivotable laterally of the interchangeable superstructures (8b) into a gripping position for transhipment of said interchangeable superstructures (8b).

6. System according to any one of the preceding claims, characterised in that electric switches, electromagnetic switches or electrostatic switches, proximity switches or electro-optical sensors are coupled to the jib (5; 5a, 5b) in order to provoke interruption of the crane drive upon too close an approximation to the contact wire (6).

7. System according to any one of the preceding claims, characterised in that the lifting stroke of the jib (5; 5a, 5b) is limited by mechanical locking means (16) at the place of origin of the jib (5; 5a, 5b) and/or that the application elements (7) have sensors (19) and actuators which enable automatic orientation of the application elements (7) within the range of the railroad tracks (1, 9) at right angles to the railroad tracks (1, 9), and/or that the spreader (7) is provided with an automatic turning mechanism by which its extension in longitudinal direction is automatically rotatable within the range of the first railroad track (1) as to be parallel to it, and/or that the jib (5; 5a, 5b) has a length such that at least two 20-feet-container may be transhipped on two adjacent vehicles without any displacement performance.

8. Railway transhipment system according to any one of the preceding claims, comprising at least a first and a second railroad track (1, 9) for containers (8), and a first stationary rotary transhipment crane (2a), characterised in that a second crane (2b) is provided for cooperation with said first crane (2a), the structural width of said cranes (2a, 2b) not exceeding an area (m) free according to standards between said two railroad tracks (1, 9), and similar application elements (7) being provided at the free ends of said jibs (5a, 5b) for co-operating with the corner hard ware (18) of the containers (8).

9. System according to any one of the preceding claims, characterised in that the jibs (5) are telescopically extensible by hydraulic means, said hydraulic means being preferably susceptible to be switched into a pressureless state upon lifting and pivoting a container (8) away from a railroad car (17), a lorry or the like so that the telescopes may be extended or shortened automatically.

10. System according to any one of. the preceding claims, characterised in that a control unit is assigned to both cranes (2a, 2b) which controls one of the cranes (2b) as a function of manually controlled positions of the other crane (2a) and/or as a function of a given container dimension into its docking and/or transhipment position.

11. A process for transhipping a transport receptacle, particularly a container (8), from a lorry (4) onto a railroad car (17) or vice-versa, or from one railroad car onto another one by means of a system according to any one of the preceding claims, characterised in that the crane (2; 2a, 2b) is arranged at a distance of one trail width from the first railroad track (1), the lorry (4) is driven beside the crane (2) or cranes (2a, 2b), the container (8) is seized by a spreader (7) or application elements for corner hard ware, lifted up and pivoted over the lorry (4) shortly above the railroad car, the upper side of its jib (5) or the spreader (7) not penetrating into the safety space (f) to the contact wire (6) above the railroad car (17), said spreader (7) together with said container (8) being preferably rotated automatically above the car (17) parallely to said railroad track (1).

12. A process for transhipping transport receptacles, particularly containers (8), from railroad cars (17) on a railroad track (1) onto lorries (4) or second railroad cars by means of a stationary transhipment crane (2; 2a, 2b) having a jib (5; 5a, 5b) and a spreader (7) optionally mounted thereon, according to any one of claims 1 to 10, characterised in that the crane (2; 2a, 2b) is arranged at a distance of one trail width from said railroad car (17), the containers (8) are seized by said spreader (7), are lifted up, over containers (8), if need be, disposed there, and put down at the other side of the crane (2; 2a, 2b) on a lowered area (14'), the upper side of the jib (5) or the spreader (7) not penetrating into the safety space (f) to the contact wire (6) above the railroad car (17), after which a lorry (4) or a second car (9) is directed between the crane (2) and the railroad track (1) or beside the crane (2a, 2b) onto which the containers (8) intended for it are charged by crane (2; 2a, 2b) again.

13. A process for transhipping a transport receptacle, particularly a container (8), from a lorry (4) onto a railroad car (17) or vice-versa, or between two railroad cars (17) placed side by side by means of a stationary transhipment crane (2a) having a jib (5) and an application element (7) mounted thereon, according to any one of claims 1 to 10, characterised in that a second transhipment crane (2b) is arranged opposite said first transhipment crane (2a), that the two cars (17) to be charged or discharged, or the lorry (4) are or is placed about in the region laterally in-between the two cranes (2a, 2b), after which the two jibs (5a, 5b) are - preferably synchronously - lead up to the two front sides of the container (8) to be transhipped, and the application elements (7) are simultaneously pivoted in a position at right angles to the tracks (1, 9) and are locked onto the corner hard ware (19) of the container (8) - optionally under image recognition control -, after which the container (8) is lifted a bit and, by simultaneously turning the cranes (2a, 2b) back, is moved over the interconnection line between the cranes (2a, 2b) and is put down onto the respective other vehicle, while the upper side of the jibs (5a, 5b) or the application elements (7) do not penetrate into the safety space (f) to the contact wire (6) above the railroad car (17).

## Revendications

1. Système de transbordement sur des voies ferrées, comprenant au moins une première ligne de voie ferrée (1) pour des récipients de transport, qui peuvent être transportée tant sur des camions qu'également sur des wagons ferroviaires - appelés ci-après conteneurs (8) -, avec une grue de transbordement (2, 2a) stationnaire, susceptible de tourner latéralement, présentant une potence (5), qui est placée en face d'une potence (5), mutuellement identique, d'une autre grue de transbordement (2b), afin de saisir simultanément un seul et même conteneur (8) ou bien dispose d'un cadre de préhension (7), et avec une deuxième ligne de voie (9) et/ou une voie de circulation (3) pour un camion (4), ligne de voie ferrée, respectivement voie de circulation, disposées directement à côté de la grue (2, 2a, 2b), la ou les potences étant déployables de façon télescopique et leurs positions de faces supérieures, dans la zone de la ligne de voie ferrée (1), étant limitées, en terme de course de levée (h), pour éviter les décharges électriques, par un espacement de sécurité (f) par rapport au fil de contact (6) mis en service électrique et sont isolés en surface, et où des parties métalliques, situées extérieurement, de la grue (2, 2a, 2b) sont reliés électriquement au potentiel de la voie ferrée.

2. Système selon la revendication 1, caractérisé en ce que la hauteur de construction du cadre de préhension (7), ajoutée à la hauteur de construction de la potence (5) dans la zone de la ligne de voie ferrée (1), en ajoutant la hauteur de déplacement nécessaire pour la mise en place des deux potences (5), respectivement pour la mise en place du cadre de préhension (7) sur un conteneur (8), est inférieure à (b) 1600 mm.

3. Système selon la revendication 1 ou 2, caractérisé en ce que la voie de circulation (3) est réalisée sous la forme de pistes en treillis et présente une deuxième ligne de voie ferrée (9) destinée à des wagons ferroviaires, disposée avec un espacement normalisé (n) par rapport à la première ligne de voie ferrée (1).

4. Système selon l'une des revendications précédentes, caractérisé en ce, que dans le rayon d'accès de la grue (2), est réalisée pour les conteneurs (8) une surface de dépose (14), qui, de préférence, est placée plus bas que la voie de circulation (3) ou plus bas que la deuxième ligne de voie ferrée (9), la différence étant à peu près de la hauteur d'un conteneur (8).

5. Système selon l'une des revendications précédentes, caractérisé en ce que le cadre de préhension (7) présente des pinces de saisie (15), destinées à des superstructures remplaçables, qui sont pivotantes dans un plan parallèle aux parois extérieures du conteneur, respectivement en ce que les potences (5) et leurs organes de saisie (7) sont commandés automatiquement et de façon symétriquement opposée, et/ou en ce que les organes de saisie (7) destinés au transbordement des superstructures remplaçables (8b) présentent des bras de saisie (12) susceptibles de pivoter, avec des preneurs (14) pouvant pivoter en position de saisie latéralement par rapport aux superstructures remplaçables (8b).

6. Système selon l'une des revendications précédentes, caractérisé en ce qu'aux potences (5; 5a, 5b) sont reliés des interrupteurs électriques, des interrupteurs électromagnétiques ou électrostatiques, des interrupteurs de proximité ou des capteurs électrooptiques, afin de provoquer une interruption de l'entraînement de la grue dans le cas d'une approche trop rapprochée du fil de contact (6).

7. Système selon l'une des revendications précédentes, caractérisé en ce que la hauteur de course de la potence (5; 5a; 5b) est limitée par un verrou mécanique (16) placé à la racine de la potence (5, 5, 5b), et/ou en ce que les organes de saisie (7) disposent de capteurs (19) et d'actionneurs qui, dans la zone des lignes de voies ferrées (1, 9), permettent une orientation d'alignement automatique des organes de saisie (7) sous un angle droit par rapport aux lignes de voies ferrées (1, 9), et/ou en ce que le cadre de préhension (7) est équipé d'un mécanisme de rotation automatique, au moyen duquel il est susceptible de tourner en plaçant son étendue longitudinale dans la zone de la première ligne de voie ferrée (1) automatiquement parallèle à celle-ci, et/ou en ce que la potence (5; 5a, 5b) est d'une longueur faisant que, au moyen de celle-ci, sans exercer de mouvement de déplacement, on peut transborder au moins deux conteneurs de 20 pieds sur deux véhicules voisins.

8. Système de transbordement sur des voies ferrées selon l'une des revendications précédentes, avec au moins une première et une deuxième lignes de voies ferrées (1, 9), pour des conteneurs (8), avec une première grue de transbordement (2a) localement fixe, susceptible de tourner, caractérisé en ce qu'une deuxième grue (2b) est prévue, pour coopérer avec la première grue (2a).

9. Système selon l'une des revendications précédentes, caractérisé en ce que les potences (5) sont déployables de façon télescopique par voie hydraulique, le dispsotif hydraulique, de préférence lors du soulèvement et du pivotement d'écartement d'un conteneur (8) par rapport à un wagon ferroviaire (17), un camion ou analogue, étant susceptible d'être commuté sans pression de manière que l'élément télescopique puisse être automatiquement allongé ou raccourci.

10. Système selon l'une des revendications précédentes, caractérisé en ce qu'aux deux grues (2a, 2b) est associée une unité de commande, qui peut commander automatiquement, dans la position d'accostage et/ou de transbordement, une première grue (2b) en fonction des positions commandées à la main de l'autre grue (2a) et/ou en fonction de la taille réelle du conteneur.

11. Procédé de transbordement d'un récipient de transport, en particulier d'un conteneur (8), d'un camion (4), sur un wagon ferroviaire (17) ou inversement, ou bien d'un wagon ferroviaire à un autre, au moyen d'un système selon l'une des revendications précédentes, caractérisé en ce que la grue (2; 2a, 2b) est installée à une distance de la première ligne de voie ferrée (1) qui est égale à la largeur d'une voie de circulation, le camion (4) est guidé à côté de la grue (2), respectivement des grues (2a, 2b), le conteneur (8) est saisi au moyen de cadres de préhension (7) ou bien d'organes de saisie pour des ferrures d'angle, est soulevé, et est hissé au-dessus du camion (4) juste au-dessus du wagon ferroviaire, et est pivoté, sans qu'alors, par la face supérieure de la potence (5), respectivement du cadre de préhension (7), il pénètre dans l'espacement de sécurité (f) par rapport au fil de contact (6), défini au-dessus du wagon ferroviaire (17), le cadre de préhension (7), équipé du conteneur (8), étant tourné, de préférence automatiquement, au-dessus du wagon (17) pour une prendre une direction parallèle à la ligne de voie ferrée (1).

12. Procédé de transbordement de récipients de transport, en particulier de conteneurs (8), depuis des wagons ferroviaires (17) se trouvant sur une ligne de voie ferrée (1) - sur des camions (4) ou des deuxièmes wagons ferroviaires, au moyen d'une grue de transbordement (2; 2a, 2b) stationnaire, équipée d'une potence (5; 5a, 5b) et d'un cadre de préhension (7) lui étant le cas échéant fixé, selon l'une des revendications 1 à 10, caractérisé en ce que la grue (2; 2a, 2b) est installée à une distance du wagon ferroviaire (17) égale à la largeur d'une voie de circulation, les conteneurs (8) sont saisis au moyen d'un cadre de préhension (7), sont hissés et sont déposés de l'autre côté de la grue (2; 2a, 2b), sur un emplacement (14') situé à un niveau plus bas, en passant au-dessus de conteneurs (8) ayant été éventuellement déposés, la face supérieure de la potence (5), respectivement du cadre de préhension (7), ne pénétrant pas alors pas dans l'espacement de sécurité (f) par rapport au fil de contact (6), installé au-dessus du wagon ferroviaire (17), suite à quoi un camion (4) ou un deuxième wagon (9) est guidé entre la grue (2;) et la ligne de voie ferrée (1) ou à côté de la grue (2a, 2b), camion ou wagon sur lesquels les conteneurs (8) leur étant destinés sont chargés de nouveau au moyen de la grue (2; 2a, 2b).

13. Procédé de transbordement d'un récipient de transport, en particulier d'un conteneur (8) depuis un camion (4) sur un wagon ferroviaire (17) ou bien inversement, ou bien entre deux wagons ferroviaires (17) placés l'un à côté de l'autre, au moyen d'une grue de transbordement (2a) localement fixe, équipée d'une potence (5) et d'un organe de saisie (7) lui étant fixé, selon l'une des revendications 1 à 10, caractérisé en ce qu'une deuxième grue de transbordement (2b) est placée en face de la première grue de transbordement (2a), en ce que les deux wagons (17) respectivement le camion (4) à charger, respectivement à décharger sont installées à peu près dans la zone située latéralement entre les deux grues (2a, 2b), suite à quoi les deux potences (5a, 5b) sont amenées, de préférence de façon synchrone, sur les deux faces frontales du conteneur (8) à transborder, simultanément les organes de saisie (7) étant pivotés dans une position perpendiculaire par rapport aux lignes de voies ferrées (1, 9) et - le cas échéant sous la commande d'un dispositif d'identification d'image -, encliquetés avec les ferrures d'angle (19) du conteneur (8), suite à quoi le conteneur (8) est soulevé d'une petite distance et, par une rotation inverse, simultanée, des grues (2a, 2b), est guidé sur la ligne de liaison entre les grues (2a, 2b) et déposé sur l'autre véhicule respectif, sans qu'alors, par la face supérieure des potences (5a, 5b), respectivement des organes de saisie (7) , il y ait pénétration dans l'espacement de sécurité (f) vis-à-vis du fil de contact (6) installé au-dessus du wagon ferroviaire (17).
